# EUROPEAN PATENT APPLICATION

(11) **EP 2 752 111 A1**
(43) Date of publication of application: **09.07.2014**
(21) Application number: 12828463.5
(22) Date of filing: 29.08.2012
(51) Int. Cl.: A01G 9/02, A01G 1/00, A01G 9/04

(54) **PLANT CULTIVATION METHOD, AND CULTIVATION CONTAINER AND CULTIVATION DEVICE USED THEREFOR**

(30) Priority: 31.08.2011 JP 2011188973
(71) Applicant: Osaka Prefecture University Public Corporation, Osaka 599-8531 (JP); Toyo Tire & Rubber Co., Ltd., Osaka-shi, Osaka 550-8661 (JP)
(72) Inventor: NISHIURA, Yoshifumi, Sakai-shi, Osaka 599-8531 (JP); TSUBOI, Masayuki, Osaka-shi, Osaka 550-8661 (JP)
(74) Representative: Eisenführ Speiser
(86) International application number: PCT/JP2012/071841
(87) International publication number: WO 2013/031832

(57) **Abstract**

A purpose of the present invention is to provide a plant cultivation method with which the growth of plants can be promoted by adjusting the environment within a culture medium, and to provide a plant cultivation container with which this cultivation method can be easily and effectively performed. The present invention provides a plant cultivation method for plants which are raised in a culture medium, which cultivation method is characterized in that water is only supplied to the plants from the side of the culture medium, and provides a plant cultivation container and a plant cultivation device used therefor.

## Description

### Technical Field

The present invention relates to a plant cultivation method. Specifically, the present invention relates to a plant cultivation method by watering from the side, and a cultivation container and a cultivation device for watering from the side.

### Background Art

Water is an essential element for plant growth. Plants glow by taking in water as well as nutrients and the like mainly through roots. In soil, air (vapor phase), water (liquid phase) and soil (culture medium) (solid phase) constitute the soil (culture medium) environment, which ideally contains each phase evenly in 1/3 of the total volume for plant growth.

Water in soil is supplied by watering. As methods for watering plants, upper watering, bottom watering, drip watering and the like are generally known. However, all of these methods easily result in deviation in the moisture percentage in a cultivation container and cause soil (culture medium) compaction by water under gravity, and spaces between soil particles decrease, which lowers the permeability and drainage property. As a result, the soil environment becomes worse, plant growth is suppressed, and diseases such as root rot become more likely to occur.

Especially, in order to cultivate crops such as root crops successfully, it is necessary to establish and maintain a suitable culture medium environment deep inside the ground.

In addition, when a plant is cultivated by bottom watering, water is absorbed only up to a certain culture medium level. Therefore, for plants the underground part of which grows in a large degree in the vertical direction, it is difficult to supply water to the upper part of the culture medium in the initial period of cultivation. But when a plant has grown to a certain stage, the plant is immersed in water. Thus, a good soil environment is not established over the whole cultivation period, which is problematic.

On the other hand, hydroponic cultivation is a cultivation method which does not use soil, and problems such as culture medium compaction do not occur. Although hydroponic cultivation has been put to practical use only in some plants, it is considered to be difficult to perform hydroponic cultivation for many plants.

Therefore, there exists the need to promote plant cultivation by establishing and maintaining an ideal culture medium environment in soil cultivation which is applicable to cultivation of many plants.

Many applications have been filed regarding watering methods of plants.

Japanese Utility Model Publication No. 7-48043 discloses a plant cultivation container containing a porous plastic material, which container has an advantage of a plastic plant pot as well as permeability and water evaporating property, and has a certain pore diameter and porosity.

JP 2-174616 A discloses a watering method of a plant pot, which method keeps a water content in the pot constant, wherein both ends of a water guiding member are immersed in water and the center part of the water guiding member is led to the inside of the plant pot.

Japanese Utility Model No. 3144816 discloses a plant pot using a water inducer which needs no watering for a long period of time.

However, no invention suggests a cultivation method in which water is supplied only from the side of the culture medium at all, and the effects of the present invention by watering from the side are not suggested at all.

### Disclosure of Invention

### Problems to be Solved by the Invention

An object of the present invention is to provide a plant cultivation method, with which plant growth can be promoted by establishing and maintaining a good culture medium environment, and to provide a plant cultivation container and a plant cultivation device with which this cultivation method can be easily and effectively performed. Means for Solving the Problems

As a result of intensive study to solve the above problems, the present inventors found that supplying water gradually from the side of the plant underground part can reduce deviation in the moisture percentage in a cultivation container, and also can suppress culture medium compaction, which results in that plant growth is promoted, the plant can be easily removed from the culture medium when transplanted or harvested, and the outbreak of diseases such as root rot can be suppressed, thereby completing the present invention.

Accordingly, the present invention provides;
[1] A plant cultivation method for plants which are raised in a culture medium, comprising supplying water to the plants only from the side of the culture medium;
[2] The cultivation method according to the above [1], wherein the culture medium is selected from soil, culture soil and sand;
[3] The cultivation method according to the above [1] or [2], wherein the plants are root crops, fruit vegetables or leaf and stem vegetables;
[4] The cultivation method according to the above [3], wherein the root crops, fruit vegetables or leaf and stem vegetables are selected from the group consisting of white radish, turnip, carrot, burdock, sweet potato, yam, Japanese yam, potato, taro, lotus root, arrowhead, Chinese artichoke, tiger lily, golden-banded lily, glycyrrhiza, ginger, turmeric, shallot, garlic, Japanese horseradish, Japanese leek, bamboo shoot, onion, eggplant, tomato, fruit tomato, sweet green pepper, bell pepper, common sage, watermelon, cabbage, Korean lettuce, green onion and broccoli;
[5] The cultivation method according to any one of the above [1] to [4], comprising supplying a larger amount of water to the upper part of the culture medium than to the lower part of the culture medium;
[6] A plant cultivation container used in the cultivation method according to any one of the above [1] to [4], wherein the container comprises a side part (1) and a bottom part (4) which form a culture medium storage part with a water supply unit (2) placed on the inside of the side part (1);
[7] The plant cultivation container according to the above [6], wherein the water supply unit (2) contains a highly infiltrating material;
[8] The plant cultivation container according to the above
[6] or [7], wherein the bottom part (4) is positioned upper than the lower end of the side part and the bottom part contains a drain unit;
[9] A plant cultivation container used in the cultivation method according to the above [5], wherein the container contains the side part (1) and the bottom part (4) which form the culture medium storage part, the water supply unit (2) on the inside of the side part (1) and a water supply restriction unit (7) on the inside of the water supply unit (2);
[10] A plant cultivation device comprising the plant cultivation container according to any one of the above [6] to [9] and a water storage part (6), wherein one end of the water supply unit (2) connects with the water storage part;
[11] The plant cultivation device according to the above [10], wherein the water storage part (6) is positioned lower than the plant cultivation container;
[12] The plant cultivation device according to the above [10], wherein the water storage part (6) is positioned lateral to the plant cultivation container;
[13] The plant cultivation device according to the above [10], wherein the water storage part (6) is positioned upper than the plant cultivation container;
[14] The plant cultivation device according to the above [12] or [13], wherein the water storage part (6) can move up and down; and
[15] The cultivation method according to any one of the above [1] to [4], wherein water (5) is supplied to the water storage part (6) of the plant cultivation device according to any one of the above [10] to [14], and water is supplied to the plants only from the side of the culture medium (3) through the water supply unit (2).

### Advantageous Effects of Invention

According to the plant cultivation method pertaining to the above [1] of the present invention, deviation in the moisture percentage in the culture medium becomes less likely to occur, and culture medium compaction becomes less likely to occur compared with plant cultivation methods conducting upper watering, bottom watering or drip watering. As a result, a suitable culture medium environment is established and maintained and plant growth is promoted. Besides, the plant can be easily removed when transplanted or harvested, and the outbreak of diseases such as root rot is suppressed. In addition, compared with bottom watering, water can be suitably supplied over the whole cultivation period especially also in cultivation of plants the underground part of which grows in a large degree in the vertical direction.

According to the plant cultivation method pertaining to the above [2] of the present invention, the effect by the method of the above [1] is exerted in soil, culture soil or sand which are most commonly used as a culture medium, and application to a wide range of plant cultivation methods is possible.

According to the plant cultivation method pertaining to the above [3] and [4] of the present invention, the effect by the method of the above [1] or [2] is exerted especially in root crops, the underground part of which is harvested, fruit vegetables or leaf and stem vegetables. Besides, the same effect is also exerted especially in root crops which grow deep inside the ground where it is difficult to establish a suitable culture medium environment.

According to the plant cultivation container pertaining to the above [5] of the present invention, the method of the above [1] can be performed conveniently and easily, and the effect by this cultivation method can be exerted well.

According to the plant cultivation container pertaining to the above [6] of the present invention, in addition to the effect by the container of the above [5], only a needed amount of water can be gradually supplied from the side and the moisture percentage of the culture medium can further be made uniform. Besides, water consumption can be suppressed.

According to the plant cultivation container pertaining to the above [7] of the present invention, when excess water exists in the culture medium, water is quickly drained outside, the moisture percentage in the container can be made uniform, and the outbreak of diseases can be suppressed. In addition, air is also supplied from below of the culture medium and a better culture medium environment can be established and maintained.

According to the plant cultivation container pertaining to the above [8] of the present invention, less water is supplied to the lower part of the culture medium where water tends to unevenly distributed under the influence of gravity, while more water is supplied to the upper part of the culture medium where water tends to be short of. That leads to further uniformized moisture percentage in the container, which can further enhance the effect by the above [5].

According to the plant cultivation device pertaining to the above [9] to [12] of the present invention, water can be automatically supplied from the side of the culture medium only by supplying water to the water storage part, and the effect by the method of the above [1] is exerted.

According to the plant cultivation device pertaining to the above [13] of the present invention, the water storage part moves up and down, which can easily adjust a water content supplied to the culture medium.

According to the plant cultivation method pertaining to the above [14] of the present invention, plants can be cultivated conveniently and easily using the plant cultivation device according to any one of the above [9] to [13], and the effect by the method of the above [1] is exerted.

### Brief Description of Drawings

Fig. 1 is longitudinal sectional views schematically showing water movement in the culture medium by upper watering or drip watering (A) and watering from the side(B).
Fig. 2A is a longitudinal sectional view schematically showing one embodiment of the plant cultivation container and the plant cultivation device of the present invention.
Fig. 2B is a partial perspective view schematically showing an upper part of the plant cultivation container and the plant cultivation device of the present invention.
Fig. 3 is a longitudinal sectional view schematically showing another embodiment of the plant cultivation container and the plant cultivation device of the present invention.
Fig. 4 is a graph showing the distribution of the water content in the culture medium by watering from the side of the present invention using microfiber cloth.
Fig. 5 is a graph showing the distribution of the water content in the culture medium by watering from the side of the present invention using a jiffy pot.
Fig. 6 is a graph showing the distribution of the water content in the culture medium by watering from the side of the present invention using various highly infiltrating materials.
Fig. 7 is graphs showing growth of radish cultivated indoors using various culture mediums and watering methods.
Fig. 8 is graphs showing growth of radish cultivated outdoors using various culture media and watering methods.
Fig. 9 is a longitudinal sectional view schematically showing one embodiment of the plant cultivation container and the plant cultivation device of the present invention.
Fig. 10 is a longitudinal sectional view schematically showing one embodiment of the plant cultivation container and the plant cultivation device of the present invention.
Fig. 11 is a graph showing the local moisture percentage in the culture medium when using the water supply restriction unit.

### Reference Sign List

- 1: Side part
- 2: Water supply unit
- 3: Culture medium
- 4: Bottom part
- 5: Water
- 6: Water storage part
- 7: Water supply restriction unit

### Mode for Carrying Out the Invention

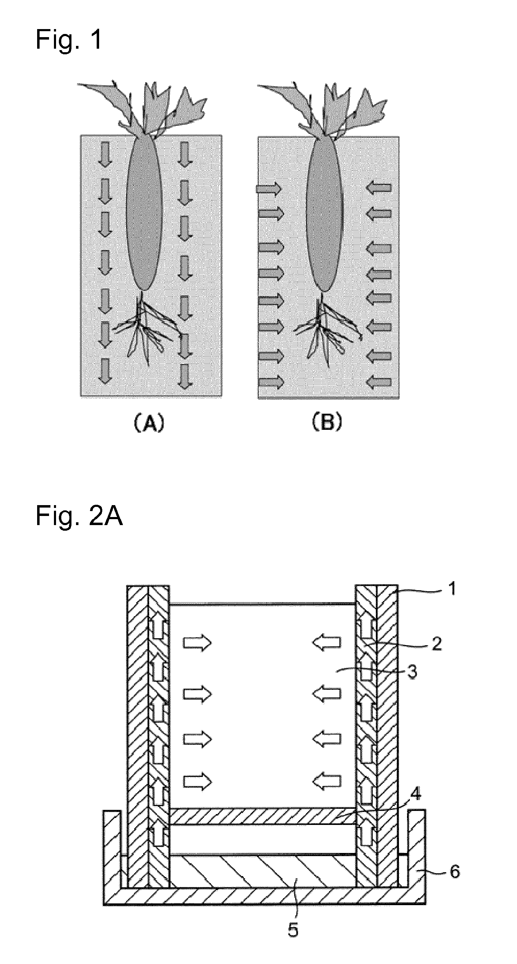

The plant cultivation method of the present invention will be described with reference to Fig. 1.

The cultivation method of the present invention is a cultivation method for plants which are raised in a culture medium such as soil as commonly performed, which cultivation method has a feature that water is supplied to the plants only from the side of the culture medium. That is, different from upper watering or drip watering which is conventionally conducted (Fig. 1 (A)) or bottom watering, the cultivation method has a feature of watering only from the horizontal direction of the culture medium (Fig. 1 (B)). In watering only from the horizontal direction of the culture medium, the moisture percentage in the culture medium does not become ununiform and a part of the culture medium does not become dry or is not infiltrated with excess water unlike upper watering, drip watering or bottom watering. Thus, watering only from the horizontal direction of the culture medium enables efficient use of water. In addition, all of supplied water does not move from the upper surface of the culture medium to lower position under the influence of gravity unlike upper watering and drip watering (Fig. 1 (A)), and only a part of water supplied from the side of the culture medium moves to lower position (Fig. 1 (B)). Therefore, culture medium compaction is less likely to occur. In addition, since culture medium compaction becomes less likely to occur, a suitable soil environment is established and maintained, and plant growth can be promoted. Moreover, the plant can be easily removed from the culture medium when transplanted or harvested, and the plant is less likely to be damaged. Further, since excess water does not exist in the bottom part of the culture medium unlike bottom watering, plant diseases such as root rot are less likely to occur. Further, compared with bottom watering, water can be suitably supplied over the whole cultivation period especially also in cultivation of plants, the underground part of which grows in a large degree in the vertical direction.

The culture mediums used in the cultivation method of the present invention include soil, culture soil, sand, pebbles, hulls of plants such as peanut, palm and rice and smoked charcoals thereof, perlite, zeolite, vermiculite, rock wool, wood chips and debris, sawdust, glass beads, pottery and other artificial culture mediums containing solid materials or foams of synthetic resins and synthetic fiber, fibrous culture mediums and the like, but are not particularly limited thereto, as long as the mediums are commonly used for cultivation of the plants which are watered. Among them, soil, culture soil and sand are preferred, since cultivation of plants can be promoted and growth is promoted more than when upper watering or bottom watering is conducted.

The plants used in the cultivation method of the present invention are not particularly limited, as long as the plants are raised in a culture medium such as soil. However, since the cultivation method of the present invention can establish and maintain a suitable culture medium environment deep under the ground, root crops which grow deep under the ground, for example, white radish, turnip, carrot, burdock, sweet potato, yam, Japanese yam, potato, taro, lotus root, arrowhead, Chinese artichoke, tiger lily, golden-banded lily, glycyrrhiza, ginger, turmeric, shallot, garlic, Japanese horseradish, Japanese leek, bamboo shoot, onion or the like are preferred.

In addition, since the cultivation method of the present invention can also promote the growth of fruit vegetables or leaf and stem vegetables, for example, eggplant, tomato, fruit tomato, sweet pepper, bell pepper, common sage, watermelon, cabbage, Korean lettuce, green onion, broccoli and the like are also preferred.

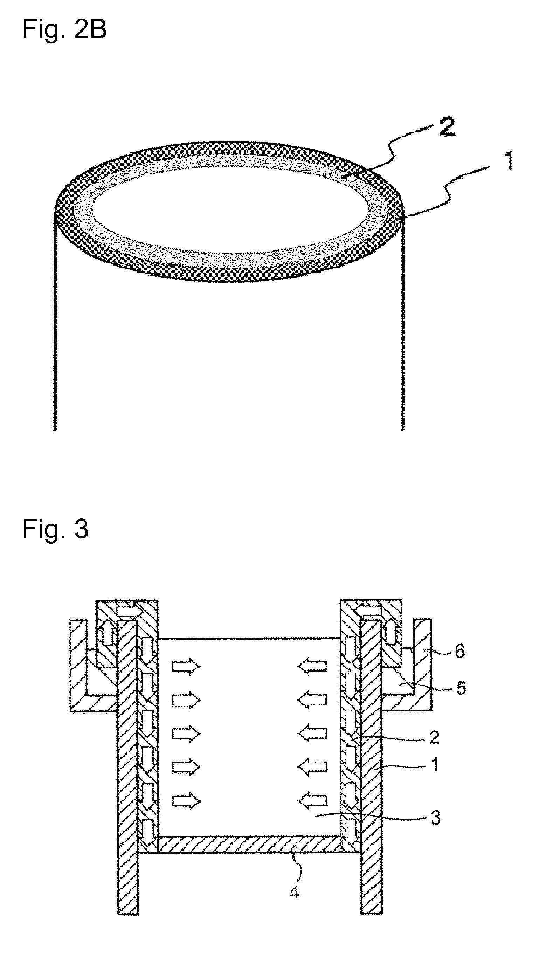

The plant cultivation container and the plant cultivation device of the present invention will be described with reference to Fig. 2 and Fig. 3.

The plant cultivation container of the present invention has a feature of containing the side part (1) and the bottom part (4) which form a culture medium storage part with the water supply unit (2) placed on the inside of the side part. The side part (1) and the water supply unit (2) of the container have a volume ratio of around 50 : 1 to around 1 : 5. Alternatively, in another embodiment, the side part may also serve as the water supply unit. The side part (1) and the bottom part (4) contain the same or different materials which can support the stored culture medium (3) and the plant (not shown). These materials include, for example, plastic such as polyethylene, polypropylene, pottery, wood and the like. Alternatively, the side part and the bottom part may be integrally formed into the container.

The water supply unit (2) is in direct or indirect contact with the stored culture medium and supplies a certain amount of water to the culture medium gradually. This water supply unit is not particularly limited as long as the unit contains infiltrating materials. For example, ones containing processed paper such as paper towel, kitchen roll and paper rag, Japanese paper, cloth such as towel, nonwoven cloth, urethane sponge, polyethylene foam and the like, especially ones containing highly infiltrating materials such as hydrophilic plastic and glass foam are preferred. Water supplied to the culture medium mainly infiltrates laterally to other parts than the solid phase in the culture medium by a capillary phenomenon.

In addition, the containers having the side part which also serves as the water supply unit may be containers which can support the culture medium and the plant and contains materials such as a jiffy pot and hydrophilic plastic which are infiltrating.

Further, the bottom part (4) of the container preferably has the drain unit (not shown), and the bottom part (4) of the container is preferably raised by being positioned upper than the lower end of the side part (1). The drain unit of the bottom part of the container functions to drain water when excess water exists in the container, and drained water does not enter the container again since the bottom part is raised. Moreover, since the culture medium on the side of the bottom part in addition to the upper part of the culture medium also comes into contact with outside air, air is supplied over the whole culture medium, thereby being able to establish and maintain a more suitable environment.

The drain unit may be, for example, single or plural holes provided on the bottom part.

The present invention provides, in yet another embodiment, the plant cultivation device containing the above plant cultivation container and the water storage part.

The water storage part (6) in the plant cultivation device of the present invention is a part storing water, and one end of the above water supply unit (2) connects with the water storage part. Water in the water storage part moves to the side of the culture medium within the water supply unit (2). And water is released to the culture medium at the side of the culture medium and is supplied to the underground part of the cultivated plant (not shown) from the side.

The water storage part (6) may be positioned lower than (Fig. 2A), lateral to (Fig. 3) or upper than the plant cultivation container, and water moves from the position to the side of the culture medium through the water supply unit (2).

Alternatively, the water storage part (6) may be provided so that the water storage part can move up and down. By making it possible to move the water storage part up and down, watering of an appropriate amount of water depending on the stage of plant growth can be easily adjusted.

In addition, the plant cultivation container of the present invention may be provided with the water supply restriction unit (7) between the water supply unit (2) and the culture medium (3), thereby being able to adjust the water content supplied to the culture medium (3) in the vertical direction. As the water supply restriction unit, for example, a perforated cellophane film and the like are preferred.

Water supplied from the water supply unit (2) is supplied to the culture medium (3) only from parts of the perforated film with holes (8).

Water supplied to the culture medium from the water supply unit mainly infiltrates laterally by a capillary phenomenon, but moves to the lower position under the influence of gravity and is unevenly distributed with lapse of time. Therefore, in watering from the side, if a larger amount of water can be supplied to the upper part of the culture medium than to the lower part of the culture medium, the difference in the moisture percentage between the upper and lower part of the culture medium can be smaller and the moisture percentage in the culture medium can be made more uniform.

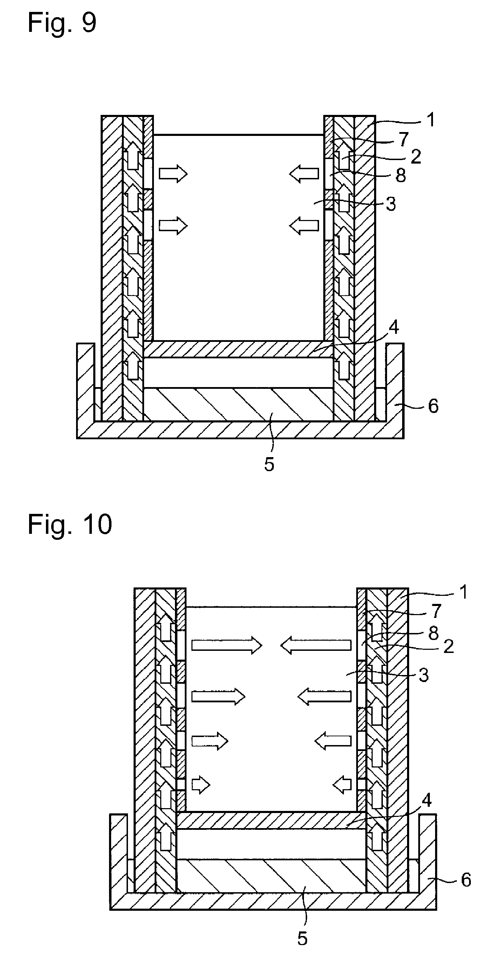

The water supply restriction unit of the plant cultivation container of the present invention is one for supplying a larger amount of water to the upper part than the lower part of the culture medium. This can be accomplished, for example, by providing a perforated film in the upper part while by providing an imperforated film in the lower part, or by increased number or area of holes in the upper part than that in the lower part (Fig. 9 and Fig. 10).

Hereinafter, the present invention will be explained in detail showing Examples and Comparative Examples. However, the present invention is not limited to the following Examples.

### Example 1

### Measurement experiment of moisture distribution in culture medium

Using a container for watering from the side with a duckboard placed on the bottom, materials which can spread water to the culture medium from the side which has absorbed water and can keep the water content in culture medium uniform as much as possible were examined.

### Experiment 1

### Method

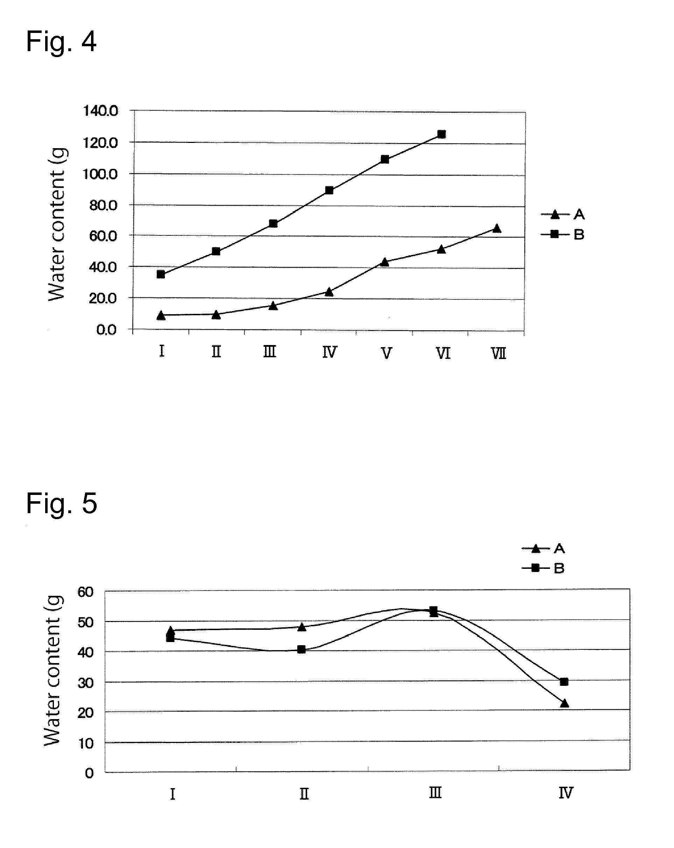

1. Culture medium (peat moss-based soil) was put into a container in which a commercially available towel was placed as the side part and a duckboard was placed as the bottom part (diameter 11 cm, height 26 cm, raised bottom 5 cm). One was used as it was (A) and the other was used after conducting upper watering once before watering (B). Watering from the side was conducted by immersing a part of the side part of the container in water so that water does not come into contact with the bottom part of the container.
2. Watering was stopped 4 days after the start of watering, the culture medium was divided into layers with a thickness of 3 cm in the vertical direction, and the weight of each layer was measured.
3. Then, each layer of the culture medium was put into an envelope and the envelope was put into an absolute dry condition at 80°C, followed by the weight measurement.
4. From the difference between the culture medium weights measured in the above steps 2 and 3, the water content contained in each layer was determined. The results are shown in the graph of Fig. 4. The abscissa of the graph shows each layer with a depth of I: 0 to 3 cm, II: 3 to 6 cm, III: 6 to 9 cm, IV: 9 to 12 cm, V: 12 to 15 cm, VI: 15 to 18 cm and VII: 18 to 21 cm from the upper surface of the culture medium, respectively.

### Result

The result of the measurement revealed that the side part absorbed water sufficiently up to the upper end. On the other hand, from Fig. 4, it was revealed that the moisture gradient was large in the culture mediums of both A and B. Especially, the culture medium close to the bottom part of the container was almost soaked, while water did not reach the upper part of the culture medium as the position goes up, and the upper part was almost in a dry state. In addition, it was indicated that the water content in B was larger than the water content in A as a whole. However, it was considered that much part of this water in B came from water supplied by upper watering before watering from the side and was not water by watering from the side.

### Experiment 2

### Method

1. Culture medium (peat moss-based soil) was put into a container which was produced by reinforcing the outside of a jiffy pot (SAKATA SEED CORPORATION) with a duckboard and by placing a duckboard as the bottom part (diameter 10 cm, height 12 cm, raised bottom 3 cm). One was used as it was (A) and the other was used after conducting upper watering once before watering (B). Watering from the side was conducted by immersing a part of the side part of the container in water so that water does not reach the bottom part of the container.
2. Watering was stopped 4 days after the start of watering, the culture medium was divided into layers with a thickness of 2 cm, 2 cm, 2 cm and 1 cm from the upper surface in the vertical direction, and the weight of each layer was measured.
3. Then, each layer of the culture medium was put into an envelope and the envelope was put into an absolute dry condition at 80°C, followed by the weight measurement.
4. From the difference between the culture medium weights measured in the above steps 2 and 3, the water content contained in each layer was determined. Experiments were carried out under the same conditions for two containers. The results are shown in the graph of Fig. 5. The abscissa of the graph shows each layer with a depth of I: 0 to 2 cm, II: 2 to 4 cm, III: 4 to 6 cm and IV: 6 to 7 cm from the upper surface of the culture medium, respectively.

### Result

The water content of IV seems to decrease sharply from Fig. 5, but this layer has a thinner thickness than other layers by 1 cm. When converted into 2 cm as in the other layers, it was indicated that the moisture gradient was far smaller than the result obtained in Experiment 1. In addition, the side of the jiffy pot absorbed water sufficiently up to the upper end and water has reached up to the upper surface of the culture medium sufficiently.

### Experiment 3

### Method

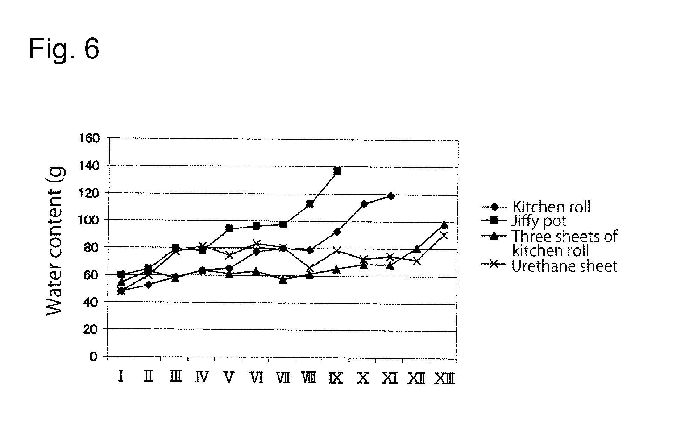

1. Culture medium (peat moss-based soil) was put into a container (A) produced by putting a sheet of kitchen roll between duckboards and a container(B) produced by putting three sheets of kitchen roll between duckboards (both containers have a diameter of 16 cm, a height of 25 cm, and a raised bottom with a height of 6.8 cm). And culture medium (Hana-chan culture soil, HANAGOKORO Co., Ltd.) was put into a container (C) produced by reinforcing the outside of a jiffy pot (SAKATA SEED CORPORATION) with a duckboard and by placing a duckboard as the bottom part and a container (D) produced by reinforcing the outside of a foam sheet of hydrophilic urethane with a duckboard (both containers have a diameter of 16 cm, a height of 25 cm, and a raised bottom with a height of 6.8 cm). Watering from the side was conducted by immersing a part of the side part of the container in water so that water does not reach the bottom part of the container.
2. Watering was stopped 4 days after the start of watering for containers A and B, 7 days after the start of watering for the container C, and 6 days after the start of watering for the container D. The culture medium was divided into layers with a thickness of 1 cm in the vertical direction, and the weight of each layer was measured.
3. Then, each layer of the culture medium was put into an envelope and the envelope was put into an absolute dry condition at 80°C, followed by the weight measurement.
4. From the difference between the culture medium weights measured in the above steps 2 and 3, the water content contained in each layer was determined. The results are shown in the graph of Fig. 6. The abscissa of the graph shows each layer with a depth of I :up to 1 cm, II: 1 to 2 cm, III: 2 to 3 cm, IV: 3 to 4 cm, V: 4 to 5 cm, VI: 5 to 6 cm, VII: 6 to 7 cm, VIII: 7 to 8 cm, IX: 8 to 9 cm, X: 9 to 10 cm, XI: 10 to 11 cm, XII: 11 to 12 cm, and XIII: 12 to 13 cm from the upper surface of the culture medium, respectively.

### Result

As seen in Fig. 6, it was indicated that the water content increased as the position came close to the bottom part in every container. It was indicated that when focusing attention only on the water content, the water contents of the culture mediums were large in containers A and B, but the moisture gradients thereof were large. Especially, large water content in the lower part needs to be avoided, since that can cause root rot of plants. These experiments indicated that the moisture gradients in containers C and D were close to constant to a certain extent. Container C was chosen to be used for the following experiments.

### Example 2

### Indoor cultivation experiment of plant by various watering methods

### Method

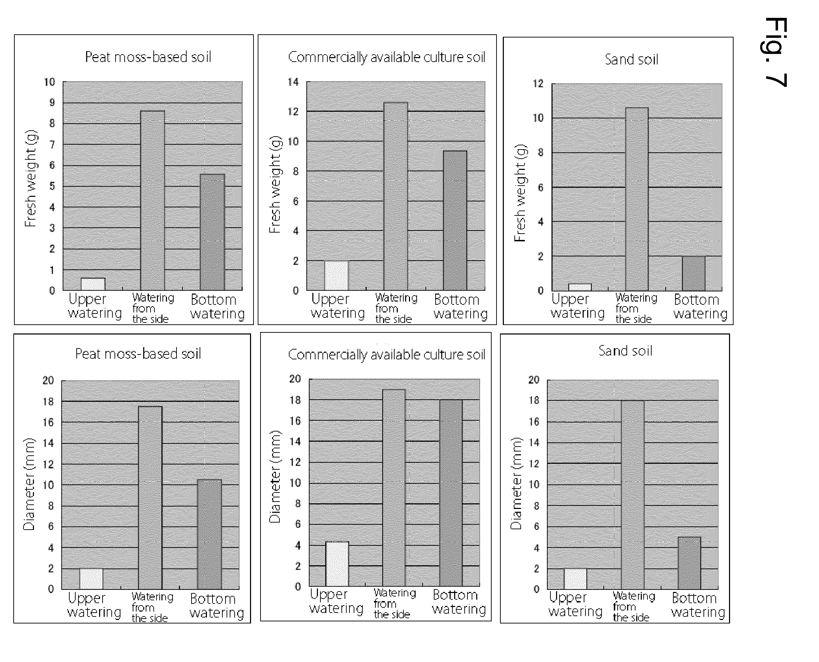

1. A jiffy pot (bottom part diameter, 70 mm, upper part diameter 100 mm, depth 75 mm) was prepared. As a container for watering from the side, the bottom part was removed and a circular plastic mesh was fitted into the position of 15 mm from the end of the bottom part as the bottom part of the container. As containers for upper watering and bottom watering, jiffy pots themselves were used.
2. Sand culture soil (sieved to 2 mm or less), peat moss-based soil, and commercially available culture soil (Hana-chan culture soil, HANAGOKORO Co., Ltd.) were put into each container in the same weight, respectively. Radish was planted in each container and the same amount of water was sprayed so that all culture mediums contain moisture.
3. In upper watering, an end of a water supply tube was fixed on the surface of the culture medium, and 25 mL of water (around 5 mL/min) was automatically supplied once a day (10 a.m.). In watering from the side and bottom watering, liquid fertilizer was put into a tray in which each container was placed and automatic watering was conducted so that the depth is around 1 cm.
4. Plants were cultivated at a room temperature of 24°C and humidity of 60% and under lighting of a fluorescent lamp (18 hours).
5. On day 21 after planting, plants were removed and the fresh weight and diameter of the plants were measured. The results are shown in Fig. 7.

In all cases where each culture medium was used, the radish cultivated by conducting watering from the side had the largest fresh weight and diameter.

### Example 3

### Outdoor cultivation experiment of plant by various watering methods

### Method

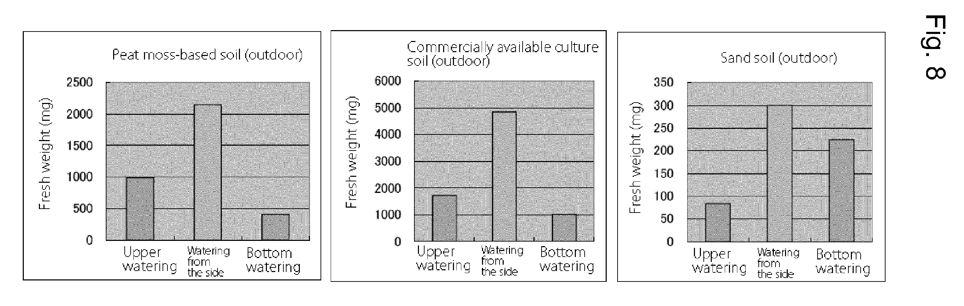

1. As a container for watering from the side, jiffy pots (bottom part diameter, 70 mm, upper part diameter 100 mm, depth 75 mm) were prepared. The bottom parts of two jiffy pots were removed, a circular plastic mesh was put between them, and the bottom parts of the two jiffy pots were put together and fixed. As a container for upper watering and bottom watering, a plastic cup, the bottom of which was removed, was used superposed on the inside of the jiffy pots for the purpose of further excluding water supply from the side. That is, in bottom watering, the side was protected so that only the culture medium and the bottom surface of the water supply container came into contact, and in watering from the side, the bottom surface was protected so that only the culture medium and the side of the water supply container came into contact, and in upper watering, only the upper surface was opened and the side and the bottom surface were protected.
2. Sand culture soil, peat moss-based soil, and commercially available culture soil (Hana-chan culture soil, HANAGOKORO Co., Ltd.) were put into each container in the same weight, respectively. Radish was planted in each container and the same amount of water was sprayed so that all culture mediums contain moisture.
3. An individual tray was prepared for each watering method and containers were put in the trays. In upper watering, water was sprinkled from the surface of the culture medium once a day, and in bottom watering, water was put into the tray so that the water surface was around 1 cm higher than the bottom surface of the container. And, in watering from the side, water was put into the tray so that the water surface was around 1 cm lower than the bottom part of the container (a plastic mesh) and the water surface was kept constant.
4. Plants were set inside an outdoor plastic greenhouse and cultivated under natural environment.
5. On day 21 after planting, plants were removed and the fresh weight of the plants was measured. The results are shown in Fig. 8.

In all cases where each culture medium was used, the radish cultivated by conducting watering from the side had the largest fresh weight. In addition, the same plant growth promoting effect by watering from the side as in indoor cultivation was shown also in outdoor cultivation.

### Example 4

### Plant cultivation experiment by watering from the side Method

1. Infiltrating urethane sponge was superposed inside a plastic mesh to make a cylindrical shape (diameter 130 mm, height 200 mm) and a wire was passed crosswise at the position of 35 mm from one end of the cylindrical shape to fix a circular mesh, thereby producing a container for watering from the side.
2. Culture soil (Hana-chan culture soil, HANAGOKORO Co., Ltd.) was put into the container and hot white radish (Kyo-bijin) was planted therein.
3. Liquid fertilizer was put into a tray in which the container was placed, and automatic watering was conducted so that the depth of the tray is around 1 cm, thereby cultivating the plant by watering from the side. Watering from the upper surface was not conducted even immediately after planting.
4. Hot white radish was cultivated at a room temperature of 24°C and humidity of 60% and under lighting of a fluorescent lamp (on a light-dark cycle of 18 hours/6 hours).
5. On day 58 after planting, hot white radish was harvested and measurements were carried out.

### Result

Without suffering from diseases such as root rot, a hot white radish with a fresh weight of 43.2g, a diameter of 35 mm, a leaf length of 190 mm, and a leaf width of 50 mm was obtained. At the time of harvesting, culture soil compaction did not occur and the hot white radish was easily pilled out of soil.

### Example 5

### Plant cultivation experiment by various watering methods

Using the same method as in Example 2 except that only commercially available culture soil (Hana-chan culture soil, HANAGOKORO Co., Ltd.) was used as culture medium, seedlings of the following plants were planted or seeds of the following plants were sowed. Planted or sowed plants were cucumber, red leaf lettuce, Korean lettuce, bell pepper, fruit tomato, sweet green pepper, watermelon, cabbage, broccoli, Japanese eggplant, spinach, mini carrot, parsley, Japanese horseradish, common sage and green onion. The plants were set inside an outdoor plastic greenhouse and cultivated under natural environment while upper watering, watering from the side or bottom watering was conducted. The plants which grew during a certain period were removed and the dry weight and the fresh weight of the plants were measured. The results are shown in Table 1 and Table 2.

**[Table 1]**

| Plant | Dry weight (mg/g/100cc/hr) | | |
|---|---|---|---|
| | Upper watering | Watering from the side | Bottom watering |
| Cucumber | 0.71 | 1.15 | 1.19 |
| Red leaf lettuce | 0.79 | 0.75 | 0.65 |
| Korean lettuce | 0.42 | 1.33 | 0.65 |
| Bell pepper | 0.63 | 0.76 | 0.71 |
| Fruit tomato | 1.42 | 1.76 | 1.43 |
| Sweet green pepper | 0.54 | 1.06 | 0.78 |
| Watermelon | 1.07 | 1.35 | 1.17 |
| Cabbage | 1.34 | 1.79 | 0.86 |
| Broccoli | 0.74 | 1.25 | 1.04 |
| Japanese eggplant | 0.62 | 0.97 | 0.9 |

**[Table 2]**

| Plant | Fresh weight (g) | | |
|---|---|---|---|
| | Upper watering | Watering from the side | Bottom watering |
| Spinach | 19.8 | 22 | 14.4 |
| Mini carrot (edible part) | 4.5 | 10.4 | 8.1 |
| Parsley | 14.9 | 21.4 | 23.9 |
| Japanese horseradish (edible part) | 5.4 | 8.2 | 7.4 |
| Common sage | 14.3 | 55.2 | 26.8 |
| Green onion | 20.5 | 43.7 | 35.8 |

### Result

In all plants except for red leaf lettuce, the dry weight or the fresh weight of the plants cultivated by watering from the side was greater than that by upper watering. In addition, Korean lettuce, bell pepper, fruit tomato, sweet green pepper, watermelon, cabbage, broccoli, Japanese eggplant, spinach, mini carrot, Japanese horseradish, common sage and green onion, the greatest dry weight or fresh weight was achieved by cultivation by watering from the side. In addition, at the time of harvesting of these plants, culture soil compaction did not occur and they were easily pilled out of culture soil.

### Plant cultivation experiment by upper watering and watering from the side

Using the same method as in Example 2 except that only commercially available culture soil (Hana-chan culture soil, HANAGOKORO Co., Ltd.) was used as culture medium, seedlings of the following plants were planted or seeds of the following plants were sowed. Planted or sowed plants were tomato (N = 3), sweet potato (N = 3) and eggplant (N = 3). The plants were set inside an outdoor plastic greenhouse and cultivated under natural environment while upper watering or watering from the side was conducted. The plants which grew during a certain period were removed and the dry weight and the fresh weight of the plants were measured. The results are shown in Table 3.

**[Table 3]**

| Plant | Fresh weight (g) | | Net fruit weight (g) | | Dry weight (g) | |
|---|---|---|---|---|---|---|
| | Upper watering | Watering from the side | Upper watering | Watering from the side | Upper watering | Watering from the side |
| Tomato average | 50.4 | 98.8 | 4.9 | 19.2 | 8.6 | 13.1 |
| Sweet potato average | 9.1 | 11.0 | - | - | 1.3 | 1.9 |
| Eggplant average | 6.1 | 8.4 | - | - | 1.2 | 1.6 |

### Result

In all plants tested, the dry weight and the wet weight of the plants cultivated by watering from the side exceeded those by upper watering. Especially in tomato, it was observed that watering from the side promoted growth by around 2 times in the fresh weight and by around 4 times in the fruit weight compared with upper watering.

### Uniformizing moisture gradient in culture medium in the vertical direction

### 1. Experiment purpose

For the purpose of further uniformizing the moisture gradient of the culture medium in the vertical direction in watering from the side, restriction of the contact area of the lower part of the culture medium which tends to contain excess water with the water supply unit is intended by placing the water supply restriction unit (perforated cellophane) which restricts permeation of water between the water supply unit and the culture medium.

### 2. Experiment materials and method

Culture medium: peat moss-based culture medium (Hana-chan culture soil, HANAGOKORO Co., Ltd.) was used and the specific gravity was set at 600 g/L by moisture control.

### Pot:

### Bottom watering

A cylindrical pot with a size specification of a diameter of 160 mm and a height of 250 mm was used and the bottom was raised by 68 mm.

### Watering from the side (without water supply restriction)

A cylindrical pot with a size specification of a diameter of 160 mm and a height of 250 mm was used and the bottom was raised by 68 mm. As the water supply unit, 3 sheets of kitchen roll were used.

### Water supply restriction A

A cylindrical pot with a size specification of a diameter of 160 mm and a height of 250 mm was used and the bottom was raised by 68 mm. As the water supply unit, 3 sheets of kitchen roll were used.

In order to restrict the contact area of the lower part of the culture medium which tends to contain excess water with the water supply unit, perforated cellophane tape (hole diameter 5.5 mm, 35 holes crosswise, 5 holes lengthwise) was placed between the culture medium and the water supply unit within a range up to 70 mm above from the bottom position of the pot, and water supply from the water supply unit to the lower part of the culture medium was restricted.

### Water supply restriction B

Using a pot with the same size specification as in water supply restriction A and kitchen roll, as the water supply restriction unit in another embodiment, imperforated cellophane was placed between the culture medium and the water supply unit within a range up to 55 mm above from the bottom position of the pot, perforated cellophane (hole diameter 5.5 mm, 35 holes crosswise, 5 holes lengthwise) was placed within a range up to further 55 mm above therefrom, and water supply from the water supply unit to the lower part of the culture medium was more restricted than in water supply restriction A.

### (i) Bottom watering

Number of samples: 4 individuals
Water level: 80 mm (12 mm above from the bottom position of the pot)

The water supply unit and the water supply restriction unit were not used, and water was supplied from the bottom of the pot.

### (ii) Watering from the side (without water supply restriction)

### Number of samples: 4 individuals

Water level: 50 mm (18 mm below from the bottom position of the pot)

Material of the side: water was supplied from the water supply unit to the culture medium using 3 sheets of kitchen roll as the water supply unit.

### (iii) Water supply restriction A

Number of samples: 4 individuals
Water level: 50 mm (18 mm below from the bottom position of the pot)

Material of the side: perforated cellophane (hole diameter 5.5 mm, 75 holes) was placed on the inside of the side in a range of 5 cm from the bottom of the pot, and water supply from the water supply unit to the culture medium was restricted.

### (iv) Water supply restriction B

Number of samples: 4 individuals
Water level: 50 mm (18 mm below from the bottom position of the pot)
Material of the side: the contact area of the water supply unit with the culture medium was more restricted than in the experimental plot A by placing imperforated cellophane in the lower part of the culture medium. Specifically, imperforated cellophane was placed on the inside of the side in a range of 5 cm from the bottom of the pot, and perforated cellophane was placed in a range of further 5 cm therefrom, thereby restricting water supplied from the water supply unit to the culture medium.

### Experiment procedure

(i) Into each pot, 1,500 g of culture medium was put and watering from the side was started.
(ii) After the start of watering, the whole weight including the pot was measured at 5-minute intervals, and the weight was measured at 15-minute intervals from 15 minutes after the start. This operation was continued until saturation.
(iii) After saturation, watering was stopped and the settlement of the culture medium was measured. And, the culture medium was divided into layers with a thickness of 10 mm from the uppermost part, and the weight of the culture medium was measured.
(iv) The dry matter weight of each layer was measured.
(v) From the difference between the weights in the procedures (iii) and (iv), the water content of the culture medium of each layer was calculated.

### 3. Results and discussion

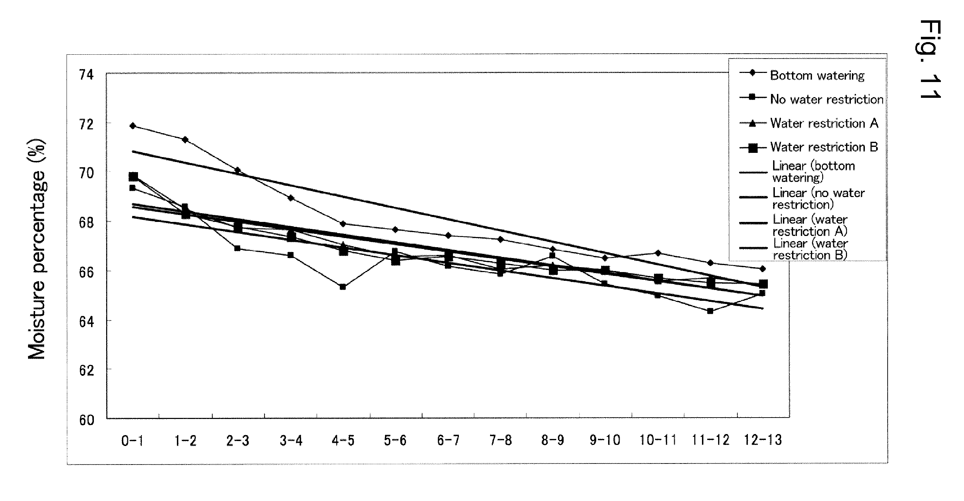

The results of the moisture percentage of the culture medium calculated for each layer of the culture medium are shown in Fig. 11.

As shown in the figure, the moisture percentage of the culture medium gradually decreases from the lower part to the upper part of the culture medium in all cultivation containers (the inclination of the approximate line is minus) and the culture medium subsides, but there were the following differences depending on watering methods.

**[Table 4]**

| Watering method | | Inclination of approximate line | Correlation coefficient | Settlement of culture medium (mm) |
|---|---|---|---|---|
| Bottom watering | | -0.4587 | 0.93043 | 22.5 mm |
| Watering from the side | No water restriction | -0.3123 | 0.852819 | 8.8 mm |
| | Water restriction A | -0.3128 | 0.932577 | 5.0 mm |
| | Water restriction B | -0.3004 | 0.923147 | 5.0 mm |

The inclination of the approximate line shown in the Table indicates the degree of reduction in the moisture percentage in the vertical direction from the lower part to the upper part of the culture medium, and a larger absolute value of the value indicates a larger change in the moisture percentage in the vertical direction.

In addition, the correlation coefficient indicates linearity of the moisture percentage in the vertical direction, and a larger value indicates that the moisture percentage linearly changes and has smaller variation.

As shown in the Table, change in the moisture percentage of the culture medium in the vertical direction is smaller in watering from the side compared with in bottom watering, and water is retained also in the upper part of the culture medium being watered. In addition, it was revealed that in watering from the side, water is retained in the upper part of the culture medium and the water content which moves to the lower part of the culture medium is small, which results in very small settlement of the culture medium. It was also revealed that when the water supply restriction unit is provided, the settlement becomes further smaller and culture medium compaction is suppressed. Moreover, it was revealed that in watering from the side, the settlement of the culture medium is small and culture medium compaction is suppressed similarly to bottom watering compared with upper watering (data is not shown).

### Industrial Applicability

The plant cultivation method, the cultivation container and the cultivation device of the present invention can be suitably applied to plant cultivation in the fields of agriculture and horticulture.

## Claims

1. A plant cultivation method for plants which are raised in a culture medium, comprising supplying water to the plants only from the side of the culture medium.

2. The cultivation method according to claim 1, wherein the culture medium is selected from soil, culture soil and sand.

3. The cultivation method according to claim 1 or 2, wherein the plants are root crops, fruit vegetables or leaf and stem vegetables.

4. The cultivation method according to claim 3, wherein the root crops, fruit vegetables or leaf and stem vegetables are selected from the group consisting of white radish, turnip, carrot, burdock, sweet potato, yam, Japanese yam, potato, taro, lotus root, arrowhead, Chinese artichoke, tiger lily, golden-banded lily, glycyrrhiza, ginger, turmeric, shallot, garlic, Japanese horseradish, Japanese leek, bamboo shoot, onion, eggplant, tomato, fruit tomato, sweet green pepper, bell pepper, common sage, watermelon, cabbage, Korean lettuce, green onion and broccoli.

5. The cultivation method according to any one of claims 1 to 4, comprising supplying a larger amount of water to the upper part of the culture medium than to the lower part of the culture medium.

6. A plant cultivation container used in the cultivation method according to any one of claims 1 to 4, wherein the container comprises a side part (1) and a bottom part (4) which form a culture medium storage part with a water supply unit (2) placed on the inside of the side part (1).

7. The plant cultivation container according to claim 6, wherein the water supply unit (2) comprises a highly infiltrating material.

8. The plant cultivation container according to claim 6 or 7, wherein the bottom part (4) is positioned upper than the lower end of the side part and the bottom part contains a drain unit.

9. A plant cultivation container used in the cultivation method according to claim 5, wherein the container comprises the side part (1) and the bottom part (4) which form a culture medium storage part, the water supply unit (2) on the inside of the side part (1) and a water supply restriction unit (7) on the inside of the water supply unit (2).

10. A plant cultivation device comprising the plant cultivation container according to any one of claims 6 to 9 and a water storage part (6), wherein one end of the water supply unit (2) connects with the water storage part.

11. The plant cultivation device according to claim 10, wherein the water storage part (6) is positioned lower than the plant cultivation container.

12. The plant cultivation device according to claim 10, wherein the water storage part (6) is positioned lateral to the plant cultivation container.

13. The plant cultivation device according to claim 10, wherein the water storage part (6) is positioned upper than the plant cultivation container.

14. The plant cultivation device according to claim 12 or 13, wherein the water storage part (6) can move up and down.

15. The cultivation method according to any one of claims 1 to 4, wherein water (5) is supplied to the water storage part (6) of the plant cultivation device according to any one of claims 10 to 14, and water is supplied to the plants only from the side of the culture medium (3) through the water supply unit (2).
